# EUROPÄISCHE PATENTSCHRIFT

(11) **EP 1 421 537 B1**
(45) Veröffentlichungstag und Bekanntmachung des Hinweises auf die Patenterteilung: **09.02.2005**
(21) Anmeldenummer: 02779140.9
(22) Anmeldetag: 07.10.2002
(51) Int. Cl.: G06F 17/60

(54) **VERFAHREN ZUM BEFÖRDERN VON POSTSENDUNGEN**
METHOD FOR SENDING POSTAL PACKETS
PROCEDE D'EXPEDITION D'ENVOIS POSTAUX

(30) Priorität: 09.10.2001 DE 10149621
(43) Veröffentlichungstag der Anmeldung: 26.05.2004
(73) Patentinhaber: Deutsche Post AG, 53113 Bonn (DE)
(72) Erfinder: MAYER, Boris, 53113 Bonn (DE); FRANKENBERG, Steffen, 50674 Köln (DE)
(74) Vertreter: Jostarndt, Hans-Dieter, Dr. Dipl.-Phys.
(86) Internationale Anmeldenummer: PCT/DE2002/003759
(87) Internationale Veröffentlichungsnummer: WO 2003/034293

(56) Entgegenhaltungen:
- EP-A- 1 053 798
- WO-A-01/86568
- US-B1- 6 269 369

## Beschreibung

Die Erfindung betrifft ein Verfahren und eine Vorrichtung zum Befördern von Postsendungen.

Aus der europäischen Patentanmeldung EP 1 053 798 A2 ist ein virtuelles Postfach bekannt. Das körperlich nicht existierende Postfach kann von Personen gemietet werden und wird mit der Adresse dieser Personen verknüpft. Postsendungen, die an das virtuelle Postfach adressiert sind, werden im Sortierungsprozess ausgesondert und die Adresse des Mieters umgeleitet. Der Mieter kann dabei angeben, in welchem Zeitraum die Postsendungen an eine angegebene Adresse umgeleitet werden sollen. Ebenso kann er diese Adresse ändern, indem er dem Postunternehmen eine entsprechende Nachricht übermittelt.

Die US-Patentschrift US 6,269,369 B1 beschreibt einen netzwerkbasierten Kontaktmanager, bei dem ausgewählte Adressinformationen eines ersten Benutzers einem zweiten Benutzer zugänglich gemacht werden können. Änderungen der Adressdaten des ersten Benutzers werden dem zweiten Benutzer mitgeteilt, und die Adressdaten werden im Adressbuch des zweiten Benutzers aktualisiert.

Bei den bekannten Beförderungsverfahren besteht das Problem, dass der Empfänger der Sendung am Zustellzeitpunkt oftmals nicht erreicht werden kann.

Dies ist vor allem bei der Zustellung von Sendungen nachteilig, die nicht in herkömmliche Briefkästen gesteckt werden können.

Der Erfindung liegt die Aufgabe zugrunde, ein gattungsgemäßes Verfahren so zu verbessern, dass die Zustellung der Postsendungen schnell, zuverlässig und mit möglichst geringem Beförderungsaufwand erfolgt.

Erfindungsgemäß wird diese Aufgabe durch die Merkmale des unabhängigen Anspruchs 1 gelöst.

Die Erfindung ermöglicht eine flexible Zustellung von Postsendungen. Die Erfindung sieht insbesondere eine flexible Steuerung des Beförderungsprozesses vor: Vorzugsweise wird hierbei die gewünschte Zustelladresse als eine virtuelle Zustelladresse behandelt, die den Anforderungen des Kunden oder des Postbetriebes entsprechend verändert werden kann.

Um eine große Flexibilität der Beförderung der Postsendungen mit einer hohen Zuverlässigkeit der Zustellung zu verbinden, werden Zustelladresse und Zustellzeitpunkt vorteilhafterweise so ausgewählt, dass die Postsendungen den gewünschten Zustellort innerhalb eines vorgegebenen Zustellzeitraums erreichen, und dass in diesem vorgesehenen Zustellzeitraum die Zustellung an die gewünschte Zustelladresse bei einem erwarteten Beförderungsverlauf der Postsendung erfolgt.

Die Verknüpfung zwischen dem Empfängeridentifikationscode und der Zustelladresse kann sowohl frei variiert, als auch entsprechend einer vorgegebenen Prozedur vorgenommen werden.

Eine variable Verknüpfung zwischen dem Empfängeridentifikationscode und der Zustelladresse ermöglicht sowohl für das Postversendungsunternehmen als auch für Versender und Empfänger der Postsendung größtmögliche Flexibilität.

Beispielsweise können hierdurch einem Geschäftsmann Verhandlungsunterlagen an einen Verhandlungsort oder einem Servicetechniker Ersatzmaterial oder Spezialwerkzeuge an den Einsatzort oder einen in der Nähe des Einsatzortes gelegenen Zustellort geschickt werden.
Eine Änderung nach einer vorgegebenen Routine ist gleichfalls zweckmäßig.

Beispielsweise ist es hiermit möglich, dass ein Empfänger während seiner normalen Arbeitszeiten eine Zustellung an seinen Arbeitsplatz wünscht, jedoch während seines Heimweges die Zustellung an eine elektronische Paketfachanlage und nach seiner Rückkehr von der Arbeit die Zustellung an seine Heimatadresse bevorzugt.

Eine hinterlegte Tabelle über die Zuordnungen zwischen den Zustellzeiten und den Zustellorten ermöglicht es dem Postversendungsunternehmen, die Zustellung jeweils an dem von dem Empfänger gewünschten Ort vorzunehmen.

Das zuvor erwähnte Beispiel der Zustellung in einer elektronischen Paketfachanlage ist ein weiteres bevorzugtes Durchführungsbeispiel der Erfindung.

Eine derartige Zustellung in der elektronischen Paketfachanlage ist insbesondere dann zweckmäßig, wenn zu erwarten ist, dass der Empfänger der Postsendung an dem zu erwartenden Zustellzeitpunkt oder generell keine Zustellung an seinem Wohnort oder Arbeitsplatz wünscht.

Beispielsweise können alle Postsendungen oder alle Postsendungen mit einem bestimm- und veränderbaren Zustellintervall der elektronischen Postfachanlage zugestellt werden.

Für das Postversendungsunternehmenen entfällt der Aufwand einer vergeblichen Zusendung an eine unerwünschte Zustelladresse einschließlich des hiermit verbundenen Logistikaufwandes für eine Lagerung, beziehungsweise Bereithaltung oder erneute Zusendung der Postsendung.

Für den Kunden des Postversendungsunternehmens ist der Einsatz des Verfahrens bei einer Zusendung in einer elektronischen Paketfachanlage gleichfalls vorteilhaft, da er hierdurch unnötige Wege zum Abholen von Postsendungen vermeidet und die Postsendung zum frühestmöglichen Zeitpunkt erhält.

Bei einer Zustellung in einer elektronischen Paketfachanlage ist die Flexibilität der Wahl des Zustellortes besonders vorteilhaft. Hierdurch ist insbesondere eine flexible Zuordnung einzelner elektronischer Postfachanlagen, beziehungsweise einzelner Postfächer möglich.

Insbesondere kann die Erfindung dazu eingesetzt werden, die elektronischen Paketfachanlagen, beziehungsweise die in ihr enthaltenen Paketfächer, flexibel zu belegen.

Dies ermöglicht es, insbesondere empfängerfreundliche sich gegebenenfalls länger erstreckende Abholintervalle vorzusehen und bei einer Abholung einer Postsendung aus dem ihr zugewiesenen Postfach unmittelbar nach der Abholung dieser Postsendung ein Postpaket in das eben freigewordene Paketfach zuzustellen.

Die flexible Auswahl mehrerer potenziell in Frage kommender elektronischer Paketfachanlagen ist ein weiterer Vorteil für den Kunden. Durch die Flexibilität des eingesetzten Verfahrens kann dieser Vorteil für den Kunden mit einem das Verfahren durchführenden Logistikunternehmen mit verhältnismäßig geringen Aufwand genutzt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele.

Die Erfindung ermöglicht einen Einsatz von verschiedenen Zustell- und Nachsendearten.

Beispielsweise gibt ein Kunde eines Händlers bei einer Bestellung seine Postnummer (Kundennummer dieses Services) und einen Zustellort (Paketfachanlage) für die Zustellung bestellter Waren an.

Die Postnummer enthält eine Prüfziffer, um die Richtigkeit überprüfen zu können.

Der Empfängeridentifikationscode kann sowohl für jede Bestellung einzeln vergeben werden als auch für eine Vielzahl von Bestellungen verwendet werden. Im ersten Schritt verfolgt das System die Vergabe einer Postnummer je Kunde. Es ist jedoch auch denkbar, daß je Transaktion eine Nummer vergeben wird, die zur Nutzung des Systems autorisiert.

Es ist besonders vorteilhaft, dass einem Kunden des Postversendungsunternehmens ein fester Empfängeridentifikationscode von dem Postversendungsunternehmen zugeteilt wird.

Die Zustelladresse kann (sowohl das einzelne Paketfach als auch) die gesamte Paketfachanlage bedeuten. Beide Definitionen der Zustelladresse sind umfasst. Die Erfindung kann auf die jeweils eingesetzte Zustelladresse angepasst werden.

### Adressierung

Der Empfänger gibt bei seiner Bestellung beim Händler neben seiner Rechnungsadresse eine abweichende Lieferadresse an.

Die Anschrift der gewünschten PACKSTATION, (PACKSTATION-Adresse) wird in der Lieferadresse angegeben. Zur eindeutigen Identifizierung der Sendung als PACKSTATION-Bestellung und zur Kundenidentifizierung muss, ebenfalls in der Lieferadresse, die Postnummer angegeben werden.

Die PACKSTATION-Adresse ist eine zustellbare, kundenindividuelle Automaten- oder Filialadresse. Vorzugsweise besteht die Adresse aus: Postnummer, PACKSTATION und -nummer, reale Postleitzahl und Ort.

Die Adressierung der alternativen Zustellmöglichkeit ist wie folgt beispielhaft dargestellt:
- Vor- und Nachname: Jörg Mustermann oder Mustermann 123456789
- 2. Namensfeld: 123456789
- Straße, Haus-Nr.: PACKSTATION 102PACKSTATION 102
- PLZ Ort: 53113 Bonn 53113 Bonn

- Die Hausnummer wird möglichst so gewählt, dass keine gleichen Hausnummern/Automatennummern an angrenzende PLZ-Bereiche vergeben werden.
- Die Hausnummern sind dreistellige Zahlen.
- Die Hausnummern werden in zwei Bereiche unterteilt, damit eine eindeutige Zuordnung zwischen Automaten und Filiale gewährleistet ist.
- Der Nummernbereich für Automaten ist von 001-499, für Filialen von 500-999 festgelegt.
- Ein Automat in einer Filiale wird als Automat bezeichnet und adressiert.
- Die Nummerierung der Automaten/Filialen erfolgt nicht gesondert je Postleitzahl, sondern nach definierten PLZ-Kreisen, zum Beispiel 53 oder Stadtgebiet Bonn, das heißt, in einen PLZ-Bezirk, hier im 53-Bereich, werden die Hausnummern übergreifend fortlaufend vergeben. Angrenzende PLZ-Kreise beginnen mit einer anderen Nummerierung.

Die Nummerierung erfolgt nach PACKSTATIONEN. Dies sind insbesondere in das Logistiksystem integrierte Paketfachanlagen oder Filialen zur Abholung der Pakete.

Beispiel:

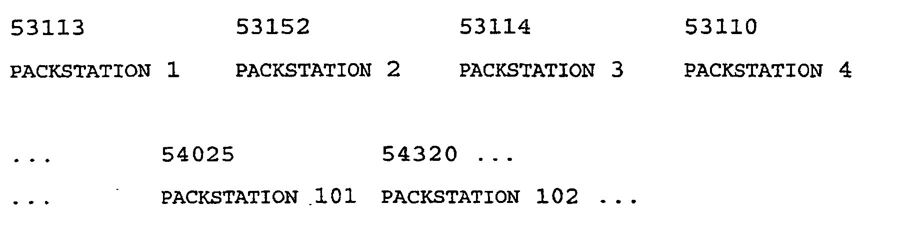

### Vorteile dieser Adressierung

- Sprechende Straßennamen
- Bessere Vermarktungsmöglichkeiten
- Höhere Kundenakzeptanz
- Der Kunde hat vorzugsweise nur eine Postnummer für alle alternativen Zustellmöglichkeiten. Die Postnummer ist eine vorzugsweise etwa 10-stellige Nummer, die einem Kunden zugeordnet ist und ihn identifiziert. Vorzugsweise gehört sie als Namenszusatz zu der Lieferadresse.
- Der Kunde muss sich nicht für jeden Automaten separat registrieren
- Die geographische "PLZ-Systematik" wird eingehalten
- Keine Probleme durch Wettbewerbsverzerrung

### Nachteile dieser Adressierung

- Erhöhter manueller Aufwand durch den Innendienst
- Versender müssen gut informiert werden
- Sicherstellung der Übermittlung der Postnummer.

Die nachfolgende Tabelle enthält eine Darstellung bevorzugter Prozessschritte.

### Prozess

| Nr. | Prozessschritt | Vorbedingungen | Vorzug | Kommentar |
|---|---|---|---|---|
| 1. | Adresseingabe bei der Bestellung | Erfassung der Postnummer im Bestellprozess | | Nach der Post-Anschriften-Norm muss ein 2. Namensfeld vorhanden sein. Bereitstellung des Prüfalgorithmus für die Postnummer |
| 2. | Paketlabel aufkleben durch den Versender | Druckmöglichkeit des Labels mit Postnummer im Adressfeld Versender kann keinen Leitcode drucken | Versender ohne Leitcodierung müssen PACKSTATION-Paket nicht separat behandeln. | Durch das Update der LOS-Datei kann dieser Punkt in Zukunft entschärft werden. Durch den Produktstatus als PACKSTATION-Produkt wird/kann dies auch durch die Versand-SW abgedeckt werden. |
| 3. | Übergabe der Sendungen an die DPAG | | | Standardprozess |
| 4. | Leitcodierung im Abgangs PZ - | Update der LOS-Datei (Postintern) | | Das Update der LOS-Datei zur internen Verarbeitung (PZ) kann bis zur Testphase realisiert werden. |
| 5. | Sortierung im Frachtzentrum | Separate Rutsche (B-Endstellen) | Negativausscheidung der PACKSTATION- | |
| | | | Sendungen Einfachere Eskalationsmöglichkeiten | |
| 6. | Nachbearbeitung in Zustellbasis (Codierung der Kunden-Nr.) | Einlernen des Innendienstes Bereitstellung der SW/HW Voraussetzungen | Das Eintippen der Postnummer entfällt bei der Zustellung; Verringerung der Fehlerpotenziale; Einfachere Beladung des Automaten vor Ort | Die Postnummer soll durch den Innendienst als Barcode-Aufkleber auf das Paket angebracht werden; Durch einen Produktkennzeichen(-Code) kann dies durch die Versand-SW durchgeführt werden; Alle Informationen können auch in den NC2001 integriert werden (Going-Live noch nicht bestätigt)?? |
| 7. | Zustellung | | Scannung der Postnummer; Kürzere Beladezeiten; Korrekte Zeitmessung | |
| 8. | Rücksendungen (Verweildauer) | | Korrekte Zeitmessung | |
| 9. | Standardprozess; Rücksendung | Standard | | |

### Ablauf

### Voraussetzungen

Der Versender verfügt über die Möglichkeit, eine abweichende Lieferadresse und optimalerweise eine Adresszusatzzeile in seinen Systemen auf dem Bestellschein zu akzeptieren und durchzuleiten.

Eine automatische Adressprüfung der Lieferanschrift, beispielsweise im Onlineshop, Warenwirtschaftssystem oder Versandlogistiksystem, müsste abgeschaltet werden, beziehungsweise PACKSTATION-Adressen akzeptieren.

Der Empfänger muss die PACKSTATION-Adresse kennen und selbständig eingeben.

Die Postnummer sollte in der Lieferadresse (=Adressierung des Paketes) angegeben werden.

Voraussetzungen für die Integration einer besonders bevorzugten Ausführungsform sind:
- Festlegung der Straßenbezeichnung
- Update der LOS-Datei
- Unterrichtung der Zentrale Gruppe BDV/LOS über die Einsatzorte der alternativen Zustellmöglichkeiten
- Übermittlung der Postnummer vom Besteller über den Versender an die Deutsche Post AG

Um eine korrekte Adressierung einer print-Bestellung (Fax, Brief) an Postpunkte realisieren zu können, ist es oftmals notwendig, ein Feld für eine abweichende Lieferadresse zu implementieren.

### Aufzunehmende/zu übermittelnde Daten

Die wichtigste Information ist die korrekte Lieferadresse mit:
- Postnummer
- Nachname, ggf. Vorname (sofern genügend Platz vorhanden)
- Straße und Nummer der gewünschten PACKSTATION
- Postleitzahl und Ort der gewünschten PACKSTATION
- Die Postnummer durch den Innendienst in der Zustellbasis

Die dargestellten Beispiele zeigen bevorzugte Ausführungsbeispiele des Verfahrens zum Versenden von Postsendungen.

Durch den Übergang der zunächst gewählten vorläufigen Zustelladresse zu einer endgültigen Zustelladresse ist eine flexible Übermittlung der Postsendungen an den jeweiligen Empfänger realisierbar.

Dies ermöglicht es dem Empfänger auch, andere Personen als Empfänger zu benennen.

Beispielsweise kann ein Kunde, der verhindert ist, ein Paket entgegenzunehmen oder aus einer elektronischen Paketfachanlage abzuholen, einem in dem Verfahren zentral integrierten Server - vorzugsweise einem Web-Server - möglichst verschlüsselt unter Eingabe von ihn identifizierenden Informationen eine andere Person als Empfänger mitteilen.

Hierdurch ist es möglich, dass ein anderer als der vorgesehene Empfänger ein Paket einer elektronischen Paketfachanlage in einem vorgebbaren Zeitintervall entnehmen kann, ohne dass es erforderlich ist, dass der andere Empfänger die geheimzuhaltenden Kundenidentifikationsangaben des ersten Empfängers kennen muss.

## Patentansprüche

1. Verfahren von Befördern von Postsendungen mit den folgenden Schritten:
- Erfassen einer Zustelladresse für die Zustellung der Postsendungen;
- Ändern der Zustelladresse nach einer vom Empfänger vorgegebenen Routine, wobei die Routine in einer Tabelle hinterlegt ist und die Tabelle eine Zuordnung zwischen mehreren Zustellzeiträumen und Zustelladressen beinhaltet, wobei die Zustelladressen in der Tabelle wenigstens eine elektronische Paketfachanlage oder ein Fach einer elektronischen Paketfachanlage umfassen;
- Ändern der Zustelladresse in Abhängigkeit von freien Fächern wenigstens einer elektronischen Paketfachanlage für den Fall, dass nach der vom Empfänger vorgegebenen Routine einem Zustellzeitraum als Zustelladresse eine elektronische Paketfachanlage zugeordnet ist;
- Zustellen der Postsendungen zu der veränderten Zustelladresse.

2. Verfahren nach Anspruch 1,
**dadurch gekennzeichnet,**
**dass** dem Empfänger ein Empfängeridentifikationscode zugeordnet wird, wobei der Empfängeridentifikationscode und die Zustelladresse miteinander verknüpfbar sind.

## Claims

1. A method for dispatching postal items comprising the following steps:
- recording a delivery address for the delivery of the postal items;
- changing the delivery address according to a routine predefined by the recipient, whereby the routine is stored in a table and this table contains the allocation of several delivery times and delivery addresses, whereby the delivery addresses in the table comprise at least one electronic parcel compartment system or a compartment of an electronic parcel compartment system;
- changing the delivery address as a function of free compartments of at least one parcel compartment system for the eventuality that, according to the routine predefined by the recipient, an electronic parcel compartment system is allocated to a delivery address for a delivery time period;
- delivery of the postal items to the changed delivery address.

2. The method according to Claim 1,
**characterized in that**
a recipient identification code is assigned to the recipient, whereby the recipient identification code and the desired delivery address can be linked to each other.

## Revendications

1. Méthode de transport d'envois postaux avec les étapes suivantes :
- saisie d'une adresse de distribution pour la distribution des envois postaux;
- modification de l'adresse de distribution selon une routine prescrite par le destinataire, la routine étant déposée dans un tableau et le tableau contenant une attribution entre plusieurs périodes de distribution et adresses de distribution, les adresses de distribution dans le tableau comprenant au moins un système de boîtes à paquets électronique ou une boîte d'un système de boîtes à paquets électronique;
- modification de l'adresse de livraison en fonction des boîtes disponibles d'au moins un système de boîtes à paquets électronique pour le cas où selon la routine prescrite par le destinataire un système de boites à paquets électronique est attribué à une période de distribution comme adresse de distribution;
- distribution des envois postaux à l'adresse de distribution modifiée.

2. Méthode selon la revendication 1,
**caractérisée en ce qu'**
un code d'identification du destinataire est attribué au destinataire, le code d'identification du destinataire et l'adresse de distribution pouvant être combinés l'un avec l'autre.
